(19) Europäisches Patentamt
European Patent Office
Office européen des brevets

(11) **EP 3 015 838 B1**

(12) **EUROPÄISCHE PATENTSCHRIFT**

(45) Veröffentlichungstag und Bekanntmachung des Hinweises auf die Patenterteilung:
**17.03.2021 Patentblatt 2021/11**

(21) Anmeldenummer: **15191003.1**

(22) Anmeldetag: **22.10.2015**

(51) Int Cl.:
*G01M 3/24* (2006.01)     *G01P 5/00* (2006.01)
*G01F 1/00* (2006.01)     *E21B 47/10* (2012.01)
*F17D 5/06* (2006.01)

(54) **VERFAHREN UND VORRICHTUNG ZUR AKUSTISCHEN MESSUNG VON AUSTRITTSGESCHWINDIGKEITEN UND/ODER AUSTRITTSVOLUMENSTRÖMEN VON GASEN**

METHOD AND DEVICE FOR ACOUSTIC MEASUREMENT OF OUTLET SPEEDS AND/OR OUTLET VOLUME FLOWS OF GASES

PROCEDE ET DISPOSITIF DE MESURE ACOUSTIQUE DE VITESSES DE SORTIE ET/OU DEBITS VOLUMIQUES DE SORTIE DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2014 DE 102014221475**

(43) Veröffentlichungstag der Anmeldung:
**04.05.2016 Patentblatt 2016/18**

(73) Patentinhaber: **Sonotec Ultraschallsensorik Halle GmbH**
**06112 Halle / Saale (DE)**

(72) Erfinder:
• **Holstein, Peter, Prof. Dr.**
**04425 Taucha (DE)**
• **Barth, Manuela, Dr.**
**01796 Pirna (DE)**
• **Probst, Christian**
**06179 Tautschenthal (DE)**
• **Bader, Nicki**
**06120 Halle (Saale) (DE)**
• **Münch, Hans-Joachim**
**06130 Halle (Saale) (DE)**
• **Zur Horst-Meyer, Santer, Dr.**
**06120 Halle (Saale) (DE)**

(74) Vertreter: **Maikowski & Ninnemann Patentanwälte Partnerschaft mbB**
**Postfach 15 09 20**
**10671 Berlin (DE)**

(56) Entgegenhaltungen:
WO-A2-2009/048340    DE-A1-102007 062 781
JP-A- 2001 305 006    US-A- 5 710 377
US-A1- 2013 163 388    US-A1- 2013 166 227
US-A1- 2014 005 958

EP 3 015 838 B1

**Beschreibung**

**Gebiet der Erfindung**

Die Erfindung betrifft ein Verfahren zur akustischen Messung von Austrittsgeschwindigkeiten und/oder Austrittsvolumenströmen von Gasen. Die Erfindung betrifft weiterhin eine Vorrichtung zur Durchführung dieses Verfahrens und einen Sensor zur akustischen Messung von Austrittsgeschwindigkeiten und/oder Austrittsvolumenströmen von Gasen.

**Stand der Technik**

Heutzutage hängen sowohl der wirtschaftliche Erfolg als auch das ökologische Abschneiden moderner Industriefelder stark von der Effizienz des technischen Equipments und ihrer Einsatzmethodik ab. Beeinflusst wird dies durch die zunehmende Komplexität der Maschinen und Anlagen besonders in den Bereichen Produktion, Engineering, Automation, Automotive und Energietechnik. Die Entwicklung zeigt, dass Unternehmen steigenden Wert auf die Verhinderung von Energieverlusten legen, um wachsende Produktionskosten zu mindern. Im Zeitraum von 2008 bis 2012 stiegen die Elektrizitätspreise jährlich um durchschnittlich ca. 3,5 Prozent in jedem EU-Mitgliedsstaat. Unternehmen haben erkannt, dass der Einsatz der Methoden der industriellen Instandhaltung für die Vermeidung von Energieverlusten und die Verbesserung der Energieeffizienz entscheidend ist, um in der Folge höhere Gewinne erzielen und die eigene Wettbewerbsfähigkeit verbessern zu können. Der Einsatz von Druckluft ist ein entscheidender Faktor für die Bewertung des weltweiten industriellen Energieverbrauchs. Druckluft ist sauber und sicher. Zudem sind die Lagerung und der Transport einfach. Aufgrund des industrieübergreifenden Einsatzes wird Druckluft nach Elektrizität, Gas und Wasser auch als vierter und teuerster Energieträger bezeichnet. Druckluft wird für ca. 10 Prozent des industriellen Elektrizitätsverbrauchs auf der Welt verantwortlich gemacht (EUROPEAN COMMISSION: Energypricesandcostsreport, 2014, http://ec.europa.eu/energy/ doc/2030/20140122_swd_prices.pdf; GLASS ALLIANCE EUROPE: 'EU leakprotection still failstoalign EU ETS', http:// www.glassallianceeurope.eu/en/common-challenges).

Einschätzungen zufolge kann dem Drucklufteinsatz ein direkter jährlicher Verbrauch von über 120 TWh (>90 Millionen Tonnen $CO_2$) in der EU und über 760 TWh (>570 Millionen Tonnen $CO_2$) weltweit zugeordnet werden (ENERSIZE LTD: CAS EE - Making Enhancement Happen, 2011, http://www.enersize.com/ en/aboutenersize/publications-new.html). Alarmierend ist, dass ca. 30 Prozent der in Druckluftsystemen genutzten Energie aufgrund von Leckagen verschwendet werden. Übereinstimmende Meldungen aus den verschiedenen Industriesektoren und Anwendungsgebieten wie z.B. Automotive, Automation und Maschinen- und Anlagenbau heben die Leck-Prävention in Druckluftsystemen als Mittel mit dem höchsten Einsparungspotenzial (> 42 %) bei der Verschwendung der Energie hervor (P. RATGEN, E. BLAUSTEIN: Compressed Air Systems in the European Union - Energy, Emissions, Savings Potential and PolicyActions, 2001, http://www.isi.fraunhofer.de/isi-de/e/publikationen/compressed-air.php). Mittels Leckortung und -reparatur sind allein in der EU Reduzierungen des Energieverbrauchs von über 15 TWh sowie Minderungen der Carbon-Emissionen von über 11 Millionen Tonnen $CO_2$ möglich.

Die Nachfrage nach Industriedienstleistungen wie Inspektionen, Messungen und Schwachpunktanalysen ist enorm gestiegen und wächst weiter. Für das Finden von Lecks gibt es verschiedene Verfahren. Das "Horchen" mit einem Stethoskop oder einfach mit einer Stange hat sich in vielen Fällen als wirkungsvoll erwiesen. Aber auch nicht-akustische Methoden, wie zum Beispiel das Absprühen mit Seifenlösung, die Beeinflussung von Flammen oder die Erzeugung von Nebel, werden erfolgreich eingesetzt. Eine weitere Methode ist das Tauchen im Wasserbad. Diese Methode ist zuverlässig und empfindlich. Allerdings ist sie durch den Einsatz von Wasser aufwendig und erfordert eine zum Teil aufwendige Nachbehandlung (z. B. Trocknung)

Diese "Klassischen Methoden" eignen sich in der Regel nur zur groben Suche von Leckagen. In den letzten Jahrzehnten kamen neue Verfahren für die Lecksuche hinzu, u.a. Ultraschallverfahren. Diese Verfahren sind sowohl für die Dichtheitsprüfung als auch zur Lecksuche geeignet. Dies gilt sinngemäß auch für die Prüfung von Vakua. In vielen Bereichen der industriellen Instandhaltung werden Ultraschalltechnologien eingesetzt. Die derzeitig zur Lecksuche und Leckbewertung in Druckluftsystemen eingesetzten Technologien und Methoden sind jedoch stark vereinfacht und nicht geeignet, um die Beschaffenheit und Größe von Leckagen zu definieren.

Die WO 2009/048340 A2 offenbart beispielsweise ein Verfahren und eine Vorrichtung, mit der Lecks in einem Bohrloch detektiert werden können, um deren Natur zu beschreiben.

Akustische Mess- und Prüfverfahren sind aus der technischen Instandhaltung und aus der Zustandsüberwachung nicht wegzudenken. Aufgrund der Vielseitigkeit der Methoden gibt es ein sehr weites Anwendungsspektrum. Neben den bekannten Anwendungen zum Lärmschutz, der akustischen und Vibrationsdiagnose von Maschinen, Anlagen und Prozessen gibt es seit langem auch Anwendungen, die den Bereich des Ultraschalls nutzen. In der technischen Diagnose sind Frequenzen bis etwa 100 kHz üblich. Hier sind viele akustische Phänomene erfassbar, die aus Reibungsvorgängen oder auch strömungsakustischen Vorgängen oder Schwingungen resultieren.

Ein wichtiges Anwendungsgebiet von Ultraschall ist der Einsatz im Bereich der Lecksuche. Dabei kann man Lecks orten aber auch deren Größe bzw. Auswirkung auf Druckluftverluste bewerten (P. Tashian, Successful Leak Detection using Ultrasonics (www.SuperiorSignal.com [08/08]); T. Klitz, L. Panzram, D. Preveti, D. Reinartz, D. Kameier, Leckortung unter DasyLab S - Low Cost Hightech, MessComp, Wiesbaden 2003 , (http://ifs.muv.fh-duesseldorf.de[08/08]); L. Jakevicius, J. Butkus, Application of Acoustic Methods for Determination of Coordinates of Leakage in Cavities bounded by large surface, ISSN 1392-2114 Ultragarsas, Nr. 1(38), 2001). Eine ähnliche Fragestellung und Einsatzmöglichkeit für Ultraschall betrifft die Dichtheit von Räumen, Fahrzeugkabinen, Luken u. ä. Hier ist allerdings ein aktiver Ultraschallsender erforderlich.

Ultraschallbewertungen werden in einigen Bereichen erfolgreich eingesetzt. Manchmal genügen einfache Diagnoseverfahren mit preiswerter Sensorik und Prüftechnik, um Fehlerzustände und Trends zu bewerten. Beispiele sind u.a. Reibung (große Defekte an Lagern, Schmierungszustand bzw. Trockenlauf, usw.), Leckagen, Kavitation usw.

WO 2009/149140 offenbart einen Ultraschall-Gasleckdetektor mit Stromverlust- und Kohlenstoffanteilanzeige. Das Verfahren umfasst die Berechnung des Kohlenstoffabdrucks auf der Grundlage der Kohlenstoff-Emissionen für ein Stromerzeugungssystem, das einen Kompressor antreibt.

US 2014/0005958 offenbart einen Ultraschall-Gasleckdetektor, der in der Lage ist, den von einem Druckgasleck erzeugten Ultraschall von Ultraschallgeräuschen der Umgebung zu unterscheiden. Eine beispielhafte Ausführungsform umfasst mehrere akustische Sensoren zum Detektieren der akustischen Energie und zum Bereitstellen von Sensorsignalen, wie einen Breitbandsensor und mindestens einen Schmalbandsensor, sowie eine elektronische Steuereinheit.

Ähnlich wie in der klassischen Technischen Akustik gibt es Effekte in den verschiedensten Frequenzbereichen. Für die höheren akustischen und Vibrationsfrequenzen steht jedoch keine dem niederen Frequenzbereich vergleichbare Sensorik und Messtechnik zur Verfügung. Deshalb haben die Entwicklungen auf diesem Gebiet der industriellen Prüfung einen etwas anderen Weg genommen als beispielsweise die Messung von Pegeln im Bereich der Akustik bei hörbaren Frequenzen. Es gibt einige Anbieter auf dem Markt, die entsprechende Prüftechnik anbieten. Etabliert haben sich Geräte, die Ultraschallfrequenzen schmalbandig erfassen können. Die Signalverarbeitung in diesen Geräten erfolgt analog. Eine wichtige Funktion ist dabei auch die Hörbarmachung. Durch Heruntermischen mit einer Trägerfrequenz haben Prüfer die Möglichkeit, Strömungsgeräusche und Körperschallphänomene aus dem Ultraschallbereich sozusagen hörbar zu machen. Eventuelle spektrale Darstellungen beziehen sich nur auf die für die Hörbarmachung heruntergemischten Daten. Die physikalisch-technische Aussagekraft ist daher begrenzt. Da aufgrund der Eigenschaften der billigen Sensoren nahezu alle Forderungen an die lineare Systemtheorie nicht erfüllt werden, sind Messungen mit solchen Geräten nicht nur nicht möglich, sondern liefern sogar oft, und zwar aus realen physikalischen Gründen, falsche Werte. Beispielsweise haben die Sensoren nichtlineare Kennlinien. Dies ermöglicht zwar empfindliche und preiswerte Messungen verhindert aber praktisch den realen physikalischen Bezug. Weiterhin werden solche Resonanzsensoren in der Regel dem stochastischen und spektralen Charakter der physikalischen Vorgänge oft nicht gerecht.

Damit weisen die etablierten Verfahren der Leckbewertung deutliche Limitierungen auf und liefern zum Teil sogar falsche Aussagen.

In der Praxis sind die Ultraschallverfahren besonders dort erfolgreich, wo viele Lecks schnell und effizient gefunden werden müssen. Für die Lokalisierung funktioniert diese Idee hervorragend und wird technologisch sicher beherrscht. Leider wird in vielen Fällen die Aussagekraft der Methode falsch eingeschätzt. Dabei werden auch physikalische Prinzipien verletzt. Aus dem durch Heruntermischen um eine Trägerfrequenz entstandenen sehr schmalbandigem Signal wird eine Art Pegel berechnet. Dies würde messtechnisch dem Schallpegel (in einem schmalen Frequenzbereich) entsprechen. Die Intensität der Quelle oder die Schallleistung wird nicht berücksichtigt. Trotzdem wird über die Wirkungskette *Strömungsgeschwindigkeit/Ausströmmenge→ Schallentstehungsmechanismus im Leck → turbulente Ausströmung* der schmalbandige "Ultraschallpegel" erfasst und über den Zahlenwert der ausgeströmten Gasmenge zugeordnet. Dieser Ansatz ist zweifelhaft, wird aber in der industriellen Praxis trotzdem verbreitet angewendet. Die dabei vorgetäuschte Genauigkeit ist dabei nicht verständlich und selbst durch aufwendige strömungsmechanisch und -akustisch unterlegte Ansätze nicht begründbar. Leckgröße, Leckform, Oberflächenbeschaffenheit des Materials, Druckdifferenz, Ausströmgeschwindigkeit und -profil sowie die Temperatur beeinflussen die akustische Abstrahlung in starkem Maße. Die Messentfernung und sogar der -winkel spielen eine wichtige Rolle.

## Zusammenfassung der Erfindung

In vielen technologischen Prozessen wird Druckluft zum Antrieb von Werkzeugen, zur Prüfung der Dichtheit von Maschinen und Anlagen, zum Lackieren, zum Säubern von Bauteilen und Arbeitsplätzen verwendet. Infolge des großen Druckluftbedarfs mit Überdrücken von p = 800 kPa bis 1200 kPa an vielen Orten in Unternehmen werden nahezu in allen Betrieben Luftverdichterstationen mit Druckluftverteilernetzen installiert. Bei unsachgemäßer Installation der Druckluftverteilernetze und bei unzureichender Pflege und Wartung der Druckluftverteilernetze und der Entnahmegeräte können erhebliche Druckluft-und Energieverluste auftreten, die hohe Kosten verursachen können. Diese Verluste in ausgeführten Druckluftversorgungsanlagen aufzudecken und zu beseitigen ist eine dringende Aufgabe.

Die Aufgabe der Erfindung besteht insbesondere darin, die Nachteile der Verfahren des Standes der Technik zur Bestimmung der Beschaffenheit von Lecks in Druckbehältern und Druckleitungen sowie der Bestimmung von Austrittsvolumenströmen von Gasen zu überwinden.

Diese Aufgabe wird gelöst durch die Bereitstellung eines Verfahrens zur akustischen Messung von Austrittsvolumenströmen von Gasen nach Anspruch 1.

Die Erfindung betrifft weiterhin eine Vorrichtung zur akustischen Bestimmmung von Leckflächen und/oder Austrittsvolumenströmen nach Anspruch 6.

## Detaillierte Beschreibung der Erfindung

Unter bestimmten Bedingungen ist es möglich, unter Beachtung und Ausnutzung der Gesetze der Strömungsakustik, Aussagen zur Quantifizierung von Austrittsvolumenströmen/Zeit von Lecks zu treffen. Diese Gesetze sind theoretisch prinzipiell ausgearbeitet. Das mathematische Gerüst ist herausfordernd und beruht auf den Ansätzen von *Lighthill.* Diese beruhen auf einem System partieller Differentialgleichungen, das jeweils nur für bestimmte Randbedingungen lösbar ist. Eine allgemeine Lösung gibt es nicht. Dies schließt auch einen einfachen formelorientierten Bezug, der in direkte Zusammenhänge übersetzbar ist (wie etwa in eine Nomogrammdarstellung) aus. Der von Lecks verursachte Schall ist breitbandig und (prinzipiell) von stochastischer Natur. Überraschenderweise wurde nachgewiesen, dass die akustischen Signale in einem weiten Frequenzbereich, beispielsweise mit einem Sensor mit linearisierbarer Kennlinie, erfasst und bewertet werden können. Damit sind alle State-of-the-art-Berechnungen für Zeit-Frequenz-Evaluierungen denkbar. Die akustischen Vorgänge an einem Leck werden als stationär betrachtet. Multisensorische Lösungen sind deshalb nicht als vorteilhaft zu bewerten, da alle notwendigen Messdaten auch durch geeignete Ortsveränderungen des Sensors um das Leck nacheinander erhalten werden können.

Die Erfindung betrifft insbesondere ein Verfahren zur akustischen Messung von Austrittsgeschwindigkeiten und/oder Austrittsvolumenströmen von Gasen, umfassend die Schritte

    i) Lecksuche, und
    ii) Leckbewertung.

Das Verfahren wird vorzugsweise mit einer einzigen Vorrichtung durchgeführt. In Schritt i) Lecksuche wird mit der erfindungsgemäßen Vorrichtung die Umgebung nach Leckagen abgesucht. Hierbei ist die absolute Empfindlichkeit des Gesamtsystems von großer Bedeutung, um die relevanten Lecks auch mit größerer Entfernung sicher lokalisieren zu können. Auch der Öffnungswinkel, die Schallcharakteristik des Sensors, ist in Bezug auf die Handhabung von Interesse. Ein großer Öffnungswinkel, oder gar eine Kugelcharakteristik, wie sie bei Mikrofonen im Hörakustikbereich angestrebt wird, ist für die Lokalisierung von Lecks ungeeignet, da das empfangene Signal räumlich keiner Schallquelle zugeordnet werden kann. Ebenso ist ein sehr kleiner Öffnungswinkel für die Lokalisierung ungeeignet, da dann einerseits die Handhabung unkomfortabel wird und andererseits die Gefahr besteht, Leckagen beim Suchen zu übersehen. Es müssen geeignete Maßnahmen ergriffen werden, um die anisotrope akustische Abstrahlung von Lecks zu berücksichtigen. Die Richtungsabhängigkeit der akustischen Abstrahlung hängt von mehreren Faktoren ab. Die Form des Lecks und die konstruktiven Begrenzung der Ausbreitung gehen ein. Die Abstrahlung ist in Abhängigkeit vom Verhältnis der Wellenlängen und Quellenausdehnung anisotrop. Eine Vorrichtung zur Leckbewertung hat dabei auch immer gleichzeitig die Funktion der Lecksuche zu ermöglichen.

Der neue Ansatz ii) zur Leckbewertung stützt sich im Wesentlichen auf drei unterschiedliche Größen. Die Art der Strömung (laminar, abgelöst oder turbulent) kann akustisch bestimmt werden (kein Geräusch [laminare Strömungsanteile], tonale Komponenten, stochastisches Rauschen). Damit kann die Größenordnung der Reynoldszahl bestimmt werden. Die Dichte und die dynamische Viskosität des Fluids sind bekannt. Die zweite notwendige Größe zur Bestimmung der Leckrate ist die Frequenz der tonalen Komponenten der turbulenten Strömung nach Strouhal. Zur Verbesserung der Messunsicherheit kann die Schallleistung nach *Lighthill* als weitere Größe zur Auswertung herangezogen werden. Diese Größe wird zur Validierung herangezogen, da sie sowohl von der Austrittsgeschwindigkeit, und damit von den tonalen Anteilen, als auch vom "Machexponenten" und damit von der Größenordnung der Reynoldszahl Re abhängt. Dies bestimmt den Gültigkeitsbereich der Anwendbarkeit des theoretischen Ansatzes. In Vorversuchen an Prüfständen bzw. durch Berechnungen mit den verfügbaren physikalischen und technischen Parametern der Druckluft wurden die Gültigkeitsbereiche bewertet und überprüft.

Die Wirbelentstehung hängt von der Reynoldszahl ab:

$$Re = \frac{\rho \cdot v \cdot d}{\eta} = \frac{v \cdot d}{\nu} \qquad (1)$$

- Bis ca. Re = 40 handelt es sich um eine laminare Strömung.
- Im Bereich von ca. Re >40 bis ca. Re = 400 handelt es sich um eine abgelöste Strömung.
- Ab ca. Re >400 handelt es sich um eine turbulente Strömung.

Dabei bedeuten:

Re   Reynoldszahl,
$\rho$   Dichte des Fluids,
$\upsilon$   Strömungsgeschwindigkeit
d   charakteristische Länge des Körpers,
v   kinematische Viskosität, und
$\eta$   dynamische Viskosität

Diese Größen müssen zur Abschätzung der Gültigkeit des Verfahrens für die jeweilige Strömungssituation evaluiert werden.

Eine weitere relevante Größe ist die Strouhalzahl $S_r$. Hier werden die strömungsakustischen Effekte zusammengeführt, die mit einem frequenzabhängigen Verhalten beschrieben werden können. Die Berücksichtigung des spektralen Charakters der Strömung ist wesentlich für die Erweiterung des Verfahrens. Im Verständnis des frequenzabhängigen Verhaltens liegt der Schlüssel zur Bewertung des Ausströmverhaltens. Die wesentliche Aussage dieses Sachverhalts besteht darin, dass für eine strömungsakustische Bewertung Messdaten notwendig sind, die eine Bewertung bezüglich der Frequenz erlauben. Die Strouhalzahl berechnet sich gemäß

$$S_r = \frac{f\,l}{u} \quad (2)$$

Dabei bedeuten:

$S_r$   Strouhalzahl,
f   Frequenz,
l   Größe des umströmten Körpers, und
u   Strömungsgeschwindigkeit.

Durch Umstellung nach der Frequenz bekommt man den Zugang zur Frequenz der Wirbelablösung

$$f = \frac{S_r u}{l} \quad (3)$$

wobei l die Größe eines umströmten Körpers darstellt.

Neben dem Frequenzverhalten ist auch die Schallleistung als Integral der Schallintensität der Schallquelle von Bedeutung. Die Schallquelle ist dabei eine Öffnung in einem druckbehafteten Behälter, durch den das Fluid austritt. Dabei treten verschiedene Schallentstehungsmechanismen auf, die bei der Wahl des Modells berücksichtigt werden müssen.

Die theoretischen Grundlagen wurden von *Lighthill* zusammengestellt.

Wesentliche Gesichtspunkte für die Bewertung der Schallleistung nach *Lighthill* sind:

- Quellen sind Mono-, Di- und Quadrupole,
- ausgeprägte Richtcharakteristik.

Deren Beitrag zur Schallleistung ist abhängig von der Strömungsgeschwindigkeit:

- Ma < 0,3 $\rightarrow$ Monopolquellen sind dominant,
- 0,3 < Ma < 0,7 $\rightarrow$ Dipolquellen sind dominant,
- 0,7 < Ma $\rightarrow$ Quadrupolquellen sind dominant,

Die Schallleistung berechnet sich dabei nach folgenden Zusammenhängen:

$$P = K \, \varrho \; \left(\frac{u}{c}\right) \, S \, u^3 \quad (4)$$

Die Konstante wird zu K $\approx$ 5 x· $10^{-5}$ abgeschätzt.

Dabei bedeuten:

P die Schalleistung,

$\varrho$ die Dichte des Fluids,

S die Lochfläche,

u die Strömungsgeschwindigkeit,

c die Schallgeschwindigkeit,

das Verhältnis u/c die Machzahl.

Die eigentliche direkte Messgröße für das Verfahren ist der Schalldruck p, der von einem geeigneten akustischen Sensor registriert werden kann. Der Schalldruck ist eine Wechselgröße und muss entsprechend gemittelt werden. Die Schallleistung ist keine direkt erfassbare Größe. Unter bestimmten Umständen kann diese im sogenannten Freifeld aus Messungen des Schalldrucks abgeleitet werden

$$P = \frac{p^2 A}{Z} \quad (5)$$

Dieser Fall wird für das Verfahren angenommen.

Dabei bedeuten:

P Schalleistung,

Z Impedanz,

A durchschallt Fläche, und

p Schalldruck.

Für die Bestimmung der Schallleistung muss eine frequenzbezogene Korrektur berücksichtigt werden, wenn ein Hochpass verwendet werden soll. Der Hochpass ist essentiell, wenn Nebengeräusche durch weitere Quellen vorhanden sind. Dies wird unter realen praktischen Betriebsbedingungen immer der Fall sein.

Außerdem muss die Schallleistung P korrigiert werden, wenn sie in einen begrenzten Raum abgestrahlt wird. Weitere Korrekturen sind möglich.

Es wird angenommen, dass die Schallleistung im hörbaren Frequenzbereich für alle Lecks einen funktional ähnlichen Frequenzverlauf hat. Damit kann der Anteil der tiefen Frequenzen am Gesamtpegel mittels eines Korrekturwertes berücksichtigt werden. Dies hat dann keine Auswirkungen auf das Verfahren zur Bewertung, da sowohl die frequenzabhängigen Variationen als auch das anisotrope Verhalten erst im Ultraschallbereich messbar auftritt.

Unter der Annahme, dass ein Leck in einer Rohrwandung so beschrieben werden kann, dass die Abstrahlung in einen Halbraum erfolgt, kann mit gängigen Näherungen gearbeitet werden. Dies ist beispielsweise für die Näherung einer Halbkugel wie folgt möglich.

$$L_p = L_w - 8 - 20\big(log(r)\big) \quad (6)$$

Dabei bedeuten:

$L_p$ Schalldruckpegel in dB,

$L_w$ Schalleistungspegel in dB, und

r Abstand des Mikrophons zur Quelle.

Für geringe Abstände wird angenommen, dass keine entfernungsabhängige

Dämpfung auftritt.

Die Messung des Schalldrucks erfolgt mit einem Mikrophon. Es erfolgt eine Mittelwertbildung, wie sie in Schallpegelmessern vorgenommen wird:

$$\langle p \rangle = \sqrt{\int_{t1}^{t2} p(t)^2 \, dt} \quad (7)$$

wobei

p den Schalldruck, und
t die Zeit

darstellen. Die Mittelungszeit hängt dabei von der notwendigen Mittelungszeit im kleinsten Frequenzband ab.

Der Bezug und die Pegelbildung erfolgen wie in der Akustik üblich - mit dem Bezugswert $p_0 = 20\ \mu Pa$. Der Sensor muss für diesen Bezug ausgelegt sein. Üblich ist in der Ultraschalltechnik oft auch ein Bezugswert von 1 µV.

$$L_p = 10 \lg \left( \frac{(p(t)^2)}{(p_0{}^2)} \right) \quad (8)$$

wobei

$L_p$ die Schalldruckpegel,
p den Schalldruck,
$p_o$ den Bezugswert des Schalldrucks, und
t die Zeit

darstellen.

Das bedeutet, dass sowohl eine Gleichrichtung als auch eine Mittelwertbildung notwendig sind. Die Mittelung muss dabei den Rechenvorschriften der Spektrenberechnung und Pegelbildung entsprechen. Die Pegelberechnung kann dabei sowohl im Zeit- als auch im Frequenzbereich erfolgen.

Die vorliegende Erfindung betrifft insbesondere ein Verfahren zur breitbandigen akustischen Messung von Austrittsvolumenströmen von Gasen und/oder Volumenströmen, umfassend die Schritte:

 i) Lecksuche
 ii) Leckbewertung

dadurch gekennzeichnet, dass die Ausströmvolumina/Zeit in Abhängigkeit der Frequenz- und Amplitudenbewertung des Schalldruckpegels bestimmt werden und die Frequenzen der Ausströmgeräusche im Bereich von 10 kHz bis 100 kHz erfasst und bewertet werden. Vorzugsweise herrscht in dem System, das auf Leckagen untersucht werden soll, ein konstanter Druck.

In einer Ausführungsform wird dabei der spektral aufgelöste Schalldruckpegel gemessen, dieser Schalldruckpegel wird anschließend bewertet und das Ausströmvolumen/Zeit wird klassifiziert.

Eine Trennung zwischen den Spektren bei Vorhandensein einer Leckage und solchen ohne Leckage erfolgt auf Basis der mittleren spektralen Amplitude bzw. der Summe aller Spektralanteile. Um einen Großteil der Störeinflüsse der Umgebung zu eliminieren, fließen nur Spektralanteile im relevanten Frequenzbereich (10 kHz bis 100 kHz) in die Analyse ein.

In dem erfindungsgemäßen Verfahren wird die Schallabstrahlung über einen breitbandigen Frequenzbereich aufgezeichnet. Der breitbandige Frequenzbereich umfasst dabei den physikalisch relevanten Frequenzbereich von 10 kHz bis 100kHz.

Dieser wird entweder analog oder digital ausgefiltert. Vorzugsweise wird der Hochpass analog ausgeführt. Damit sind die immer vorhandenen störenden Geräusche aus dem hörbaren Frequenzbereich für die Bewertung trotz des breitbandigen Verfahrens ausgeblendet. Für das Antialiasing wird eine Kombination aus analogen und digitalen Filtern eingesetzt.

Die Messung des Schalldrucks erfolgt erfindungsgemäß mit einem Mikrophon. Es erfolgt eine Mittelwertbildung mit digitalen Datenblöcken und Zeitkonstanten, wie sie in Schallpegelmessern vorgenommen wird. Das Verfahren ist dadurch gekennzeichnet, dass zur Auswertung und Beurteilung der strömungsakustischen Messergebnisse der spektral aufgelöste Schalldruckpegel gemessen wird. Die Messung des spektral aufgelösten Schallpegels kann im Zeitbereich analog oder digital durch Bandpassfilter für die Frequenzbereiche:

- 1/3 Oktav, und
- Schmalbandoktaven n(1/12 ...1/24) erfolgen.

Die spektrale Bewertung kann auch nach einer schnellen Fouriertransformation (FFT) und anschließender Bildung des Leistungsspektrums erfolgen.

Die Berechnung des Schalldruckpegels im jeweiligen Frequenzbereich erfolgt beispielsweise mittels Fast Fouriertransformation. Dabei muss die Linienzahl an die spektrale Auflösung angepasst werden. Eine Filterung (Glättung) wird vorgeschaltet. Das heißt, es wird eine Datenvorverarbeitung mit digitalen Filtern vorgenommen.

Das Messverfahren muss die Anisotropie der akustischen Abstrahlung berücksichtigen. Die Schallabstrahlung ist abhängig vom Winkel $\psi$ zwischen der Sonde und dem Leck (Winkel zwischen Sonde und Leckachse). Dies wird insbesondere nach der Überführung des gemessenen Zeitsignals in den Frequenzraum anhand der Leistungsdichtespektren deutlich. Die spektrale Charakteristik wird von dem Winkel $\psi$ zwischen Sonde und Leck beeinflusst, wobei die Abstrahlung symmetrisch ist. Das heißt, es wird die gleiche spektrale Charakteristik für die Winkel $\psi$ und $-\psi$ gemessen. Um eine verlässliche Auswertung der Messdaten zu ermöglichen, ist es bevorzugt, dass der Winkel zwischen Leck und Sonde so gewählt wird, dass die spektrale Charakteristik des Lecks am ausgeprägtesten ist. Dies ist der Fall, wenn der Schallpegel maximal ist.

Bei der Suche nach dem maximalen Schallpegel sollte der Abstand der Sonde zum Leck konstant sein. Es hat sich als günstig erwiesen, wenn der Abstand der Sonde zum Leck kleiner 2 m, bevorzugt kleiner 1 m, mehr bevorzugt kleiner 0,5 m, besonders bevorzugt 0,2 m ist. Aufgrund der Dämpfung des akustischen Signals in Abhängigkeit von der Entfernung von Sonde zur Quelle bewirkt eine Verdopplung des Abstandes eine Abnahme des Schallpegels um 6 dB.

Vorteilhafterweise wird in der vorliegenden Erfindung die gemessene breitbandige Schallabstrahlung des Lecks in dem gemessenen Frequenzbereich bewertet. Das Heruntermischen des gemessenen Signals um eine Trägerfrequenz, wie es aus dem Stand der Technik bekannt ist, entfällt. Aus den zu Beginn genannten Gründen bietet dies Vorteile bei der Bewertung des Lecks mit Hilfe des Ausströmvolumens/Zeit. Als Kriterium für die Leckbewertung werden aus den akustischen Zeitsignalen Merkmale aus dem Frequenzraum extrahiert. Hierfür wird eine Spektralanalyse durchgeführt.

Die Berechnung der Spektren erfolgt in Form von einseitigen Leistungsdichtespektren. Dafür werden die im Zeitraum gemessenen Daten durch eine Fouriertransformation (FT) in den Frequenzraum überführt.

Die Fouriertransformation eines Zeitsignals $\{f_k\}$ liefert Fourierkoeffizienten $\{F_j\}$

$$\text{Fouriertransformation:} \{f_k\} \leftrightarrow \{F_j\} \quad (9)$$

die in komplexer Schreibweise (imaginäre Einheit i) angegeben werden können

$$F_j = a_j + ib_j \quad (10)$$

Das Amplitudenspektrum lässt sich nun aus dem Absolutbetrag der komplexen Fourierkoeffizienten $(a^2+b^2)^{1/2}$ bestimmen.

Das Leistungsspektrum (auch als "Power"-Darstellung bezeichnet) entspricht dem Betragsquadrat der Fourierreihe $\{F_j\}$ der Fouriertransformierten der Autokorrelation des Zeitsignals $\{f_k\}$

Autokorrelation von $\{f_k\}$:

$$h_k = \frac{1}{N} \sum_{l=0}^{N-1} f_l \cdot f_{l+k}^* \quad (11)$$

(*: konjugiert komplexer Wert)

Fouriertransformation

$$\{f_k\} \leftrightarrow \{F_j\} \quad (12)$$

$$\{h_k\} \leftrightarrow \{H_j\} = \left\{ |F_j|^2 \right\} \quad (13)$$

(vgl. Butz, 2005). Hierbei ist $|F_j|^2$ das Quadrat des Absolutbetrags der Fourierkoeffizienten bzw. das Produkt aus Fourierkoeffizienten mit ihrem konjugiert komplexen Wert ($F_j \cdot F_j^*$).

Das Leistungsdichtespektrum (psd für power spectral density) bezieht nun das Leistungsspektrum (LS, auch MSS von mean-squared spectrum) auf die vorgegebene Auflösebandbreite (zweiseitiges Spektrum)

$$psd = \frac{|F_j|^2}{\Delta f} = \frac{MSS}{\Delta f} \quad (14)$$

Betrachtet man einseitige Spektren (nur positive Frequenzen), erfolgt die Berechnung des Amplituden- bzw. Leistungsspektrums wie folgt
einseitiges Amplitudenspektrum:

$$AS = 2 \cdot abs(F_j) = 2 \cdot |F_j| = 2 \cdot \sqrt{a_j^2 + b_j^2} \quad (15)$$

einseitiges Leistungsspektrum:

$$LS = 2 \cdot F_j \cdot F_j^* = 2 \cdot (a_j + ib_j) \cdot (a_j - ib_j) = 2 \cdot (a_j^2 + b_j^2) \quad (16)$$

Der Faktor 2 ergibt sich aus der Tatsache, dass die Fourierkoeffizienten zweiseitig - für positive und negative Frequenzen - berechnet werden. Betrachtet man ein einseitiges Spektrum (nur positive Frequenzen), werden die Negativanteile durch Verdopplung der Amplitudenwerte bei positiven Frequenzen berücksichtigt.

Mit der Spezifizierung zur Berechnung von Amplitudenspektrum (AS) bzw. Leistungsspektrum (LS) lassen sich die Spektrentypen einfach untereinander umwandeln

$$AS^2 = 4 \cdot (a_j^2 + b_j^2) = 2 \cdot LS \quad (17)$$

$$AS = \sqrt{2 \cdot LS} \quad (18)$$

$$LS = \frac{AS^2}{2} \quad (19)$$

Der während der akustischen Messungen verwendete Verstärker wirkt in Form eines Verstärkungsfaktors auf die empfangene Signalamplitude und hat damit auch Auswirkung auf die spektrale Amplitude. Der Einfluss des Verstärkungsfaktors *vf* auf die Spektrenamplitude bei verstärkt gemessenem Signal (Index mess) ist gegeben als

$$AS_{korr} = \frac{AS_{mess}}{vf} \quad (20)$$

bzw.

$$LS_{korr} = \frac{AS_{korr}^2}{2} = \frac{AS_{mess}^2}{2 \cdot vf^2} = \frac{LS_{mess}}{vf^2} \quad (21)$$

Um zufällige Schwankungen in den einzelnen Spektren während einer Leckanalyse zu dämpfen, wird bevorzugt eine Mittelung über mehrere Einzelspektren vorgenommen. Die spektrale Analyse beruht dann bevorzugt auf der Berechnung von spektralen Mittelwerten. Die spektralen Merkmale, die im gesamten Signal vorhanden sind, werden durch diesen Prozess deutlicher hervorgehoben. Für die Mittelung werden mindestens 100 Einzelspektren, bevorzugt mindestens 200 und besonders bevorzugt mindestens 500 Einzelspektren verwendet.

Die Wahl des Zeitausschnittes, der analysiert wird hat keinen Einfluss auf die Darstellung der spektralen Merkmale. Wird zum Beispiel ein Zeitsignal mit der Gesamtlänge von 5 s aufgezeichnet, so können für die spektrale Analyse unterschiedliche Zeitausschnitte (beginnend bei Sekunde 0, 2, 3 oder 4) genutzt werden. Erfindungsgemäß können die Zeitsignale der Einzelspektren bis zu 99% überlappen, bevorzugt beträgt der Überlapp 50%. Für die Durchführung des erfindungsgemäßen Verfahrens ist jedoch ein Überlapp des Zeitsignals der Einzelspektren nicht notwendig.

Neben der Anzahl zu mittelnder Einzelspektren ist von entscheidender Bedeutung für das erfindungsgemäße Verfahren, welche spektrale Auflösung nötig ist, um die Charakteristika des Lecks im Frequenzbereich zu erfassen. Die spektrale Auflösung ergibt sich aus der Abtastrate und der Anzahl der für die Spektren Berechnung verwendeten Datenpunkte des Zeitsignals.

Eine hohe Auflösung (kleine Frequenzintervalle; Schmalbandanalyse) bewirkt, dass sehr schmalbandige Effekte (Effekte, die auf einen schmalen Frequenzbereich begrenzt sind) auflösbar sind. Im Gegenzug sind zur Berechnung eines solchen Spektrums vergleichsweise viele Datenpunkte des Zeitsignals nötig. Da die Spektralanalyse mittels FT Stationarität im Zeitbereich voraussetzt, setzt die Notwendigkeit vieler Datenpunkte stationäre Verhältnisse (Stationarität des Signals und gleichbleibende Messbedingungen - Abstand, Winkel) über einen entsprechend langen Zeitraum voraus.

Im Gegensatz kann mit einer geringen Anzahl von Datenpunkten des Zeitsignals nur ein Spektrum mit vergleichsweise geringer Frequenzauflösung (Breitbandanalyse) berechnet werden. Schmalbandige Effekte (Lage und Amplitude eng begrenzter lokaler Maxima und Minima) sind nicht mehr auflösbar (picket fence Effekt).

Die Grundstruktur von Leckspektren ist sehr breitbandig, daher können die spektralen Charakteristika bereits bei vergleichsweise geringer Frequenzauflösung dargestellt werden. Die Frequenzauflösung beträgt erfindungsgemäß bevorzugt mindestens 4 kHz.

Die Spektren der strömungsakustischen Messergebnisse können erfindungsgemäß durch den Vergleich mit Referenzspektren oder eine Parameter-bezogene Berechnung beurteilt werden. Erfindungsgemäß ist auch eine Kombination beider Methoden möglich.

Methode1 :

Es erfolgt ein Vergleich der gemessenen Spektren mit denen in einer hinterlegten Datenbank. In einem empirischen Verfahren erfolgt ein Vergleich der Spektren mit einer in Versuchen an Prüfständen ermittelten Vergleichsdatensammlung. Es wird eine große Anzahl von Versuchen benötigt. Möglich sind beispielsweise die Methode der kleinsten Quadrate oder auch (lernende) neuronale Netze. Diese Methoden erfordern eine starke Rechenleistung, die auf portablen Prüfgeräten nicht zur Verfügung steht.

Methode 2:

Die spektrale Auflösung wird zur Leistungs- und Kostenreduktion auf das notwendige Maß reduziert. Durch eine Mittelung einer Vielzahl von Einzelspektren werden die für das Leck charakteristischen spektralen Merkmale extrahiert. In diesem Fall kann mit einer deutlich reduzierten Anzahl von Stützstellen weitergerechnet werden. Die Anzahl richtet sich dabei nach den speziellen spektralen Merkmalen wie lokalen Maxima. Diese müssen noch sicher dargestellt werden können. Die Mittelungs- und Glättungsalgorithmen dienen nur zur Unterdrückung des stochastischen Anteils. Eine ausreichende Mittelung wird mit einer Anzahl von etwa 500 Überlagerungen (z.B. gemittelte Leistungsspektren) erreicht. Bereits mit einer Frequenzauflösung von 4 kHz ist die Reproduzierbarkeit der Datenextraktion gewährleistet.

Aus den geglätteten Schalldruckpegelspektren wird ein Parametersatz extrahiert, der die Merkmale des Spektrums nach einer Vorschrift (z.B. Methode der kleinsten Quadrate) bestimmt.

Für die Extraktion eines Parametersatzes aus den Spektren gibt es mehrere Möglichkeiten, die zielführend sind. Beispielhaft werden folgende Möglichkeiten gemäß der Erfindung vorgeschlagen:

Die Lage der lokalen Frequenzmaxima der geglätteten Spektren wird bestimmt.
Für die einzelnen spektralen Anteile um die lokalen Maxima werden Parameter berechnet:

Schwerpunkt (1. Moment)
Trägheitsmoment (2. Moment)
Schiefe (3. Moment)
Kurtosis (4. Moment)

Die kombinierte Verrechnung der Parameter erlaubt die Beschreibung des Frequenzverhaltens mit wenigen typischen Zahlen. Auch hier erfolgt der Vergleich mit hinterlegten Datensätzen. Dies erhöht die Aussagesicherheit.

Über den spektralen Schwerpunkt des mittleren Spektrums wird dem vermessenen Leck eine Leckfläche zugeordnet. Dafür werden Kalibrierkurven genutzt. Diese Kurven belegen den linearen Zusammenhang zwischen spektralem Schwerpunkt und dem Leckdurchmesser bzw. der Leckfläche. Die Kalibrierkurven werden genau wie die übrigen oben aufgeführten Parameter für definierte Bedingungen mit Hilfe des erfindungsgemäßen Verfahrens gesammelt und als Vergleichsdatensätze hinterlegt.

Eigentliches Ziel der akustischen Bewertung ist die Zuordnung des Schalldruckpegels zum Ausströmvolumen/Zeit. Mit Hilfe der ermittelten Leckgeometrie kann das Ausströmvolumen/Zeit berechnet werden. Die Ausströmvolumina/Zeit werden dann klassifiziert, um den statistischen Charakter und der Wahrscheinlichkeitsaussage des Verfahrens Rechnung zu tragen. Die Einordnung der Werte des Schalldruckpegelspektrums erfolgt in Größenklassen, die den in der Praxis üblichen Einteilungen der Leckraten folgen. Die Größenklassen sind je nach Anwendung frei wählbar. Diese Einordnung geschieht mittels einer empirisch gefundenen Zuordnung.

Zur Verifikation der Daten wurden folgende Größenklassen mit einer Unterteilung in 5 Kategorien gewählt:

Leckage genau/ kleiner 0,3 mm
Leckage kleiner 1 mm
Leckage von 1 mm → gut hör- und fühlbar
Leckage von 1,5 mm → deutlich hör- und fühlbar
Leckage von 2 mm → Trocknen nasser Hände möglich

Daran angelehnt, können beispielsweise folgende Durchmesserbereiche für die Zuordnung der Leckgrößenklassen gewählt werden.

| Leckdurchmesser | < 0,3 | 0,3 0,5 | ... | 0,5 1,0 | ... | 1,0 1,5 | ... | > 1,5 | mm |
|---|---|---|---|---|---|---|---|---|---|
| Größenklasse | I | II | | III | | IV | | V | |

Das Ergebnis des Verfahrens ist die Bereitstellung eines empirischen Zusammenhangs unter Berücksichtigung der theoretischen Grundlagen und Gültigkeitsbereiche zwischen den gemessenen akustischen Größen und einer geometrischen Größe eines Lecks (Durchmesser, Fläche). In gewissen Grenzen kann die Geometrie des Lecks vernachlässigt oder korrigiert werden.

Die Kenntnis der Leckgröße (effektiver Leckquerschnitt $A_a$) erlaubt es schließlich, den Leckvolumenstrom (Austrittsvolumen/Zeit) dV/dt anzugeben

$$\frac{dV}{dt} = c \cdot A_a \quad (22)$$

wobei c eine Konstante ist, die je nach Form des Lecks und der konstruktiven Begrenzung der Ausbreitung vorgegeben ist.

In einer Ausführungsform der Erfindung ergibt sich damit das folgende Vorgehen zur Leckbewertung:

1. Das Vorhandensein eines Lecks wird sichergestellt aufgrund des Schalldruckpegels im breitbandigen Frequenzbereich von 10 kHz bis 100 kHz.
2. Das Zeitsignal wird unter langsam variierendem Winkel zwischen Ultraschallsonde und Leck aufgezeichnet. Der optimale Empfangswinkel ergibt sich aus der maximalen Amplitude des aufgezeichneten Signals.
3. Es erfolgt eine Spektrenberechnung für den entsprechenden Signalausschnitt mit vorgegebener spektraler Auflösung und die Mittelung einer vorgegebenen Anzahl von Einzelspektren.
4. Berechnung des spektralen Schwerpunktes für das mittlere Spektrum.
5. Zuordnung des spektralen Schwerpunktes zur effektiven Leckfläche und gegebenenfalls die Berechnung der Leckrate mit Hilfe der ermittelten Leckfläche.
6. Einordnung des Lecks entsprechend einer vorgegebenen Klassifikation nach Leckgröße oder Leckrate.

Die Erfindung betrifft weiterhin eine Vorrichtung und einen Sensor zur akustischen Messung von Austrittsgeschwindigkeiten und/oder Austrittsvolumenströmen. Die erfindungsgemäße Vorrichtung umfasst einen Ultraschallsensor, ein Modul, das als akustisches Horn genutzt wird und eine Software, wobei mit Hilfe der Software die gemessenen Zeitsignale des Schalldruckpegels in ein Frequenzspektrum überführt werden. Die Software beinhaltet darüber hinaus Parametersätze und/oder Spektren der Schallabstrahlung im Bereich von 10 kHz bis 100 kHz von geometrisch definierten Lecks, die zum Vergleich mit den gemessenen Daten eines Lecks unbekannter Geometrie genutzt werden, um dieses zu Klassifizieren.

In einer Ausführungsform der Vorrichtung beinhaltet die Software Parametersätze, für die Korrektur der Pegel in Abhängigkeit von der Art des Gases, welches aus der untersuchten Leckage entweicht. Die Parametersätze wurden vorher experimentell bestimmt.

Die Vorrichtung umfasst vorzugsweise einen Sensor auf Basis eines breitbandigen Schallempfängers mit entsprechender elektronischer Beschaltung sowie ergänzende Module zur Verbesserung der Lecksuche im ersten Schritt i) des Verfahrens.

Der Sensor kann in einer Ausführung ein piezoelektrischer Wandler sein. In einer anderen Ausführung kann ein optisches Mikrofon (FOM) verwendet werden. Weiterhin können Kondensatormikrofone auch in der speziellen Ausführung als Elektretkondensatormikrofon eingesetzt werden. Eine moderne und miniaturisierte Sonderform der Kondensatormikrofone sind die aus dem Consumerbereich bekannten MEMS-Mikrofone. Der Ultraschallsensor muss ein breitbandiger Schallempfänger sein und eine linearisierbare Kennlinie haben. Erfindungsgemäß bedeutet breitbandig, dass Schall im Frequenzbereich von 10 kHz bis 100 kHz detektiert werden kann.

In einer bevorzugten Ausführungsform umfasst der erfindungsgemäße Ultraschallsensor ein Mikrofon, einen analogen Hochpass-Filter, um tiefe Frequenzen auszufiltern, und einen digitalen Tiefpass-Filter, um hohe Frequenzen auszufiltern. Durch die Kombination des analogen Hochpass-Filters und des digitalen Tiefpass-Filters wird ein vollständiges digitales Signal erhalten, das für die weitere Verarbeitung genutzt wird.

In einer weiteren Ausführungsform des Sensors umfasst dieser zusätzlich einen PeilLaser zur Justierung der Messachse und/oder einen Temperatursensor. Die Messung der Temperatur kann zum Beispiel zur Umrechnung von Volumen- in den Normvolumenstrom verwendet werden.

Die in US2014005958A1 beschriebene Möglichkeit, mehrere schmalbandige piezoelektrische Wandler einzusetzen, deren Resonanzfrequenzen Quasistützstellen des Frequenzspektrums abbilden, kann in der beschriebenen Lösung nicht verwendet werden, da der Informationsverlust in den Frequenzbereichen zwischen diesen Stützstelle zu groß ist bzw. eine große Anzahl von Sensoren einzusetzen wäre.

Zur Verbesserung der Lecksuche im Vorfeld der Leckbewertung gemäß Schritt ii) des erfindungsgemäßen Verfahrens werden verschiedene Module mit dem Sensor kombiniert.

In einer Ausführungsform der Erfindung wird eine Modulausführung verwendet, um den Öffnungswinkel und die Empfangsstärke, wie oben beschrieben, zu beeinflussen. Hierbei wird ein akustisches Horn mit einer bestimmten Schalleintrittsfläche am Sensor so angebracht, dass dessen großer Öffnungswinkel auf einen gewünschten kleineren Öffnungswinkel angepasst wird. Die Form des inneren Profils im akustischen Horn kann sowohl konisch als auch parabolisch oder exponentiell ausgeführt sein und den jeweiligen Frequenzbereichen angepasst werden. In einer bevorzugten Ausführungsform ist die Dimension und die Form für den Bereich zwischen 10 kHz und 100 kHz optimiert.

Eine weitere Ausführungsform eines Moduls wird verwendet, um Leckagen an Oberflächen, die vom Prüfer abgewandt sind, finden zu können. Hierzu wird ein Schallführungsrohr, das keine eigene Richtwirkung hat, am Sensor angebracht. Dieses Schallführungsrohr kann sowohl ein einfaches gerades Rohrstück, als auch ein Rohr mit einem beweglichen Abschnitt sein. Durch biegen des Rohres in einem beweglichen Rohrabschnitt ist es möglich, Leckagen auch an Rückseiten von Prüfobjekten zu finden bzw. Zugang zu diesen zu erhalten. Weiterhin kann am Schallführungsrohr eine Spitze angebracht werden, um den effektiven Schalleintritt beliebig verringern zu können. Somit kann ein sehr kleiner Suchspot realisiert werden.

Aufgrund der geringen Entfernung des Sensors vom zu bewertenden Leck sind entfernungsbezogene Korrekturen nicht notwendig und sinnvoll. Eine möglichst gleichmäßige Entfernung des Sensors vom Leck (beispielsweise 0,2 m) ist zu empfehlen.

Akustische Sensoren haben mit zunehmender Frequenz eine immer stärkere Richtwirkung. Diese Richtwirkung kann frequenzselektiv genutzt werden, um die Ortung eines Lecks zunächst mit großem Öffnungswinkel bei niedrigen Frequenzen zu beginnen und dann in einem höheren Frequenzbereich aufgrund des kleineren Öffnungswinkels räumlich einzugrenzen.

Die Erfindung wird nachstehend anhand von 13 Figuren und 3 Ausführungsbeispielen näher erläutert.

Es zeigen:

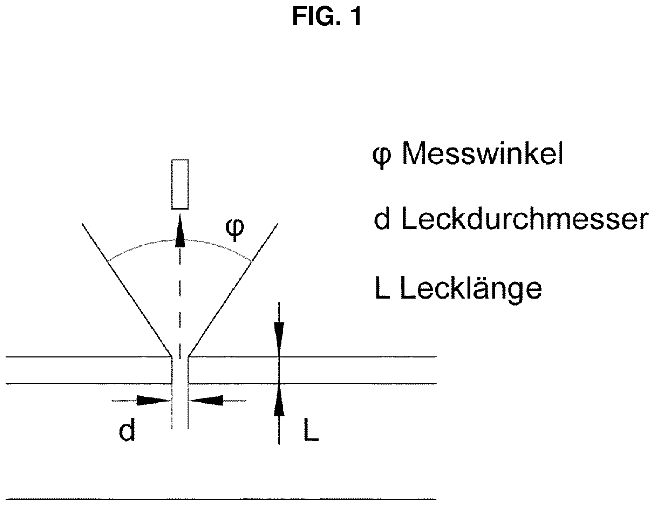

**Figur 1:** die typische Geometrie und Kennwerte eines Lecks in einem druckbeauflagten Volumen. Kompliziertere Leckformen erfordern Korrekturen.

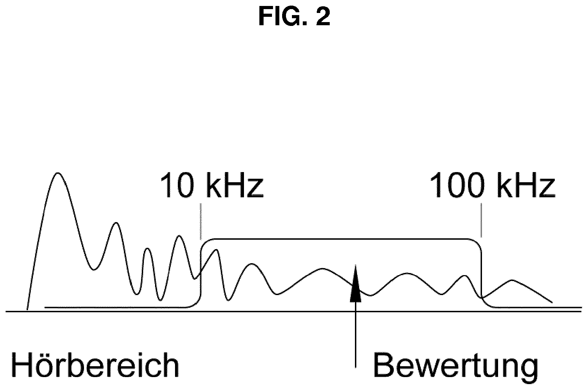

**Figur 2:** die symbolische Darstellung eines Leistungsspektrums des Schallpegels einer Schallquelle (Leck). Messtechnisch relevant ist der Bereich oberhalb 10 kHz und unterhalb von 100 kHz. Diese Filter werden analog realisiert. Dazwischenliegende Bandpassfilter können digital umgesetzt werden.

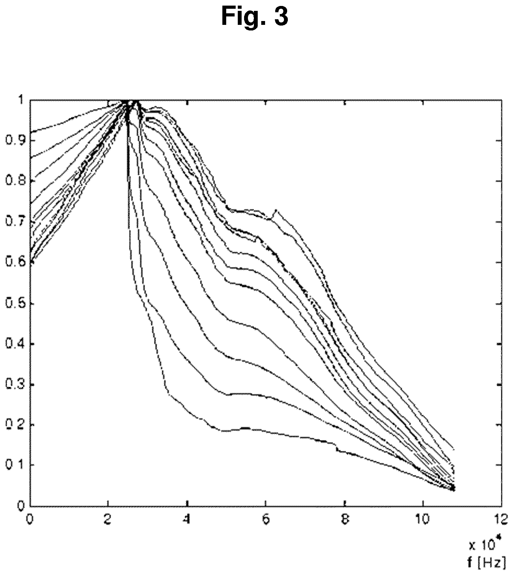

**Figur 3:** die Messung des spektral aufgelösten Schallpegels (normierte Darstellung) eines Lecks bei wachsender Druckdifferenz bzw. sich deshalb erhöhender Ausströmrate.

**Figur 4:** mittlere Leistungsdichtespektren für zwei geometrisch verschiedene Leckagen A und B. Beide Leckagen wurden mit verschiedenen Winkeln $\psi$ zwischen Sensor und Leckachse vermessen.

**Figur 5:** die Richtcharakteristik eines Lecks bei verschiedenen Frequenzen. Aufgetragen sind die Pegelwerte in Abhängigkeit vom Winkel $\psi$ zwischen Sonde und Leckachse.

**Figur 6:** die Mittelwerte der spektralen Schwerpunkte für Lecks in unterschiedlichen runden und gequetschten Kanülen in Abhängigkeit vom Durchmesser der Leckage.

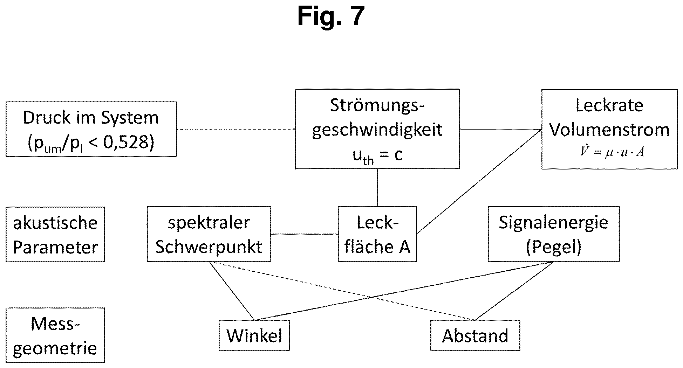

**Figur 7:** den Zusammenhang zwischen Systemparametern (Messgeometrie), akustischen Messungen und gesuchter Leckrate. Vorausgesetzt wird, dass der Systeminnendruck hinreichend groß ist (in Luft mindestens etwa doppelt so groß wie der Umgebungsdruck). In diesem Fall kann abgeschätzt werden, dass die Ausströmgeschwindigkeit gleich der Schallgeschwindigkeit im Austrittsquerschnitt ist. Zur Berechnung der Leckrate sind Angaben zur Leckfläche nötig. Diese können aus der Analyse der spektralen Messdaten (Akustik) in Form des spektralen Schwerpunktes gewonnen werden. Da der spektrale Schwerpunkt in Abhängigkeit vom Empfangswinkel variiert, ist darauf zu achten, die Messungen bei vergleichbaren Bedingungen durchzuführen. Hierfür kann die Signalenergie (Ultraschall-Pegelwert) herangezogen werden, die bei einem Winkel im Bereich von 20 ... 25° zur Leckachse maximal ist.

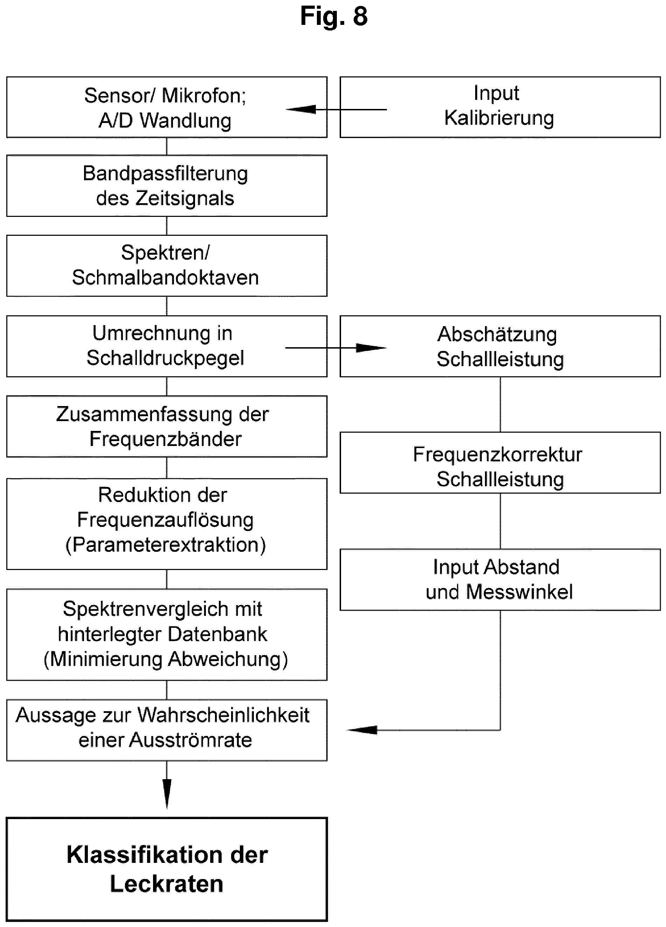

**Figur 8:** ein Flussdiagramm der wichtigsten Verfahrensschritte zur Leckbewertung. Sowohl spektrale Merkmale als auch Werte, die auf die Schallleistung bezogen sind, werden benötigt. Die Klassifikation erfolgt dann durch Einordnung in ein Leckratenraster, beispielsweise in Form eines Histogramms.

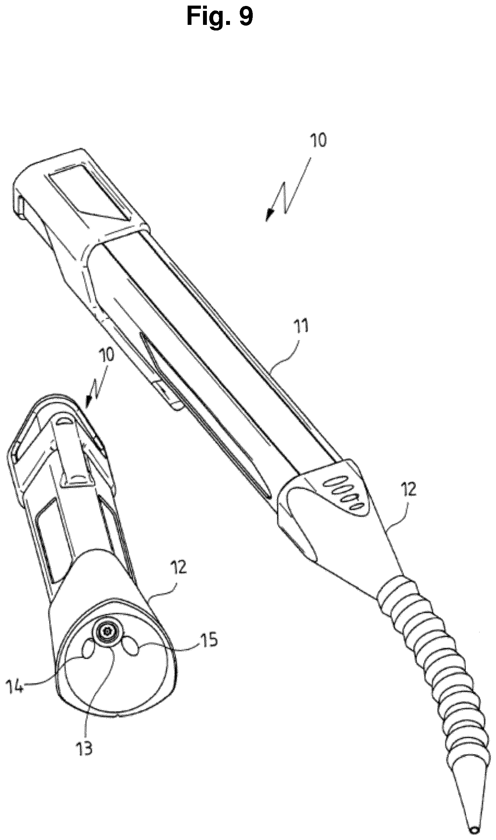

**Figur 9:** zwei Ausführungsformen der erfindungsgemäßen Vorrichtung 10 zur Suche von Leckagen: ein Sensor 11 mit einem langen Modul 12 und eine Sensor 11 mit einem kurzen Modul 12. Bei dem Sensor 11 mit dem kurzen Modul 12 sind der optionale Peillaser 14, das Mikrofon 13 und der optionale Temperatursensor 15 zu erkennen.

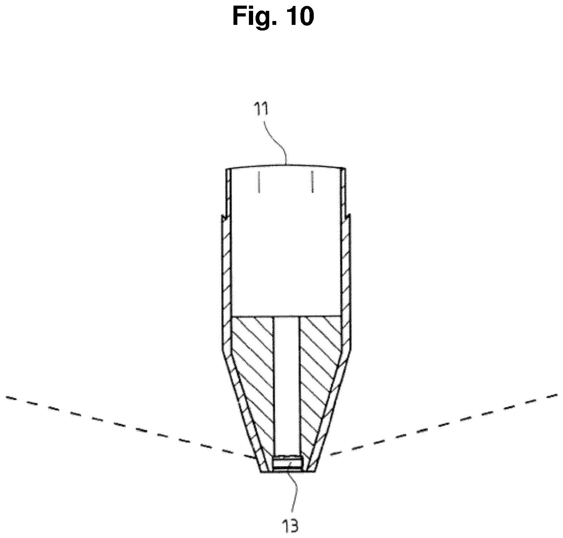

**Figur 10:** die Grundkonfiguration des Sensors mit breiter Richtungscharakteristik (270°) zur Klassifizierung von Leckagen, umfassend ein Sensorgehäuse 11 mit Mikrofon-Schallentkopplung und eine Mikrofonkapsel 13 (breitbandig 10 - 100 kHz).

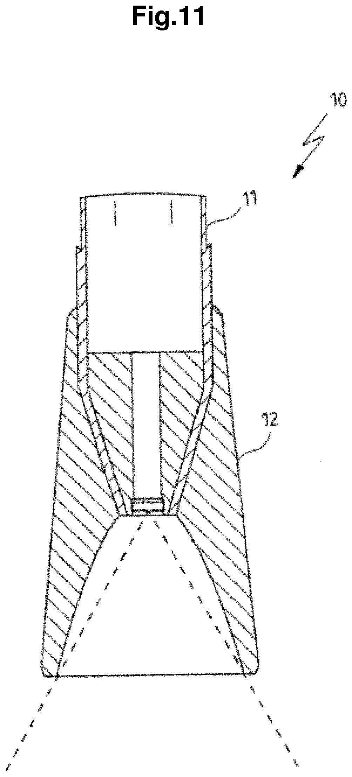

**Figur 11:** einen Sensor gemäß Figur 10 mit angepasster Richtcharakteristik für die Lokalisierung von Leckagen (z.B. 60°), weiterhin umfassend ein parabolisches Horn mit schmalerem Öffnungswinkel.

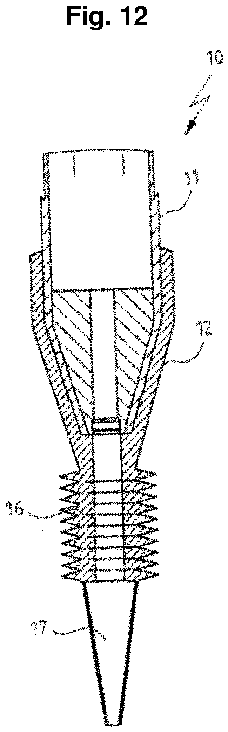

**Figur 12:** einen Sensor gemäß Figur 10 mit angepasster Richtcharakteristik für die Nahsuche, weiterhin umfassend ein kurzes Schallführungsrohr 17 und einen Faltenbalg 16 zur Modifikation der Ausrichtung des Schallführungsrohres 17.

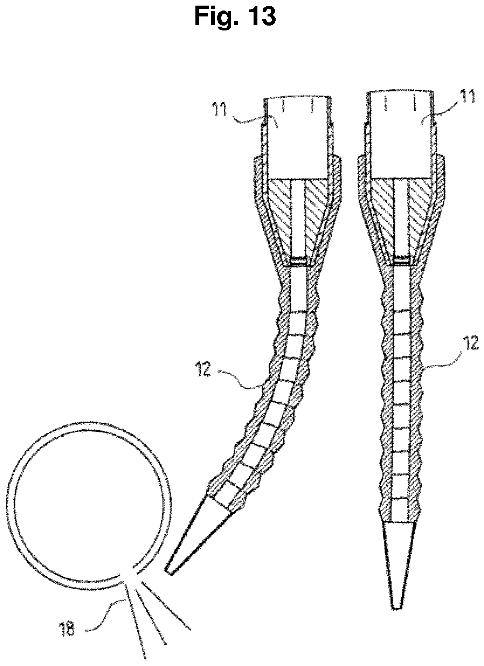

**Figur 13:** die Modifikation des Schallführungsrohrs des Sensors für die Nahsuche. Die Figur zeigt einen Sensor 11 umfassend ein langes Schallführungsrohr für die Nahsuche von Leckagen 18 in engen, schwer zugänglichen Bereichen, und einen Sensor 11 umfassend ein gekrümmtes Schallführungsrohr für die frontale Nahsuche von Leckagen 18 in unzugänglichen Bereichen.

## Ausführungsbeispiel 1

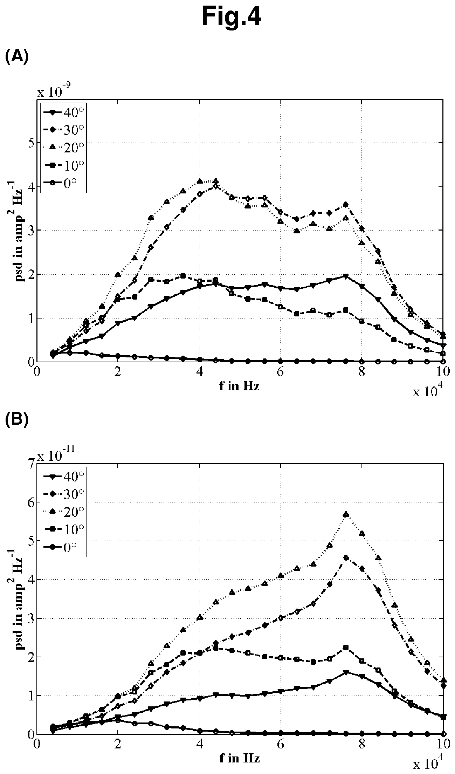

Für eine Kanüle A mit einem Durchmesser $D_A$ = 0,58 mm und einer Länge $L_A$ = 38,1 mm und für eine Kanüle B mit einem Durchmesser $D_B$ = 0,25 mm und einer Länge $L_B$ = 12,7 mm, die von einem Gas durchströmt werden, wurde der Schalldruck an einem Leck gemessen. Der Messabstand der Sonde zum Leck betrug 1 m, der Innendruck in der Kanüle 7 barü und der Winkel $\psi$ zwischen Sonde und Leckachse wurde variiert. Der bei der Messung verwendete Verstärker wirkt in Form eines Verstärkungsfaktors von 4. Es wurden jeweils 39999 Einzelspektren ausgewertet, wobei die für die Analyse ausgewählten Zeitfenster um 50% überlappten. Anschließend wurde ein Leistungsdichtespektrum in einem Frequenzbereich von 4 kHz bis 100 kHz berechnet. Aus diesen Einzelspektren wurde ein mittleres Leistungsdichtespektrum berechnet. Die spektrale Auflösung beträgt 4 kHz. Die berechneten mittleren Leistungsdichtespektren für Kanüle A sind in Figur 4 (A) dargestellt und für Kanüle B in Figur 4 (B). Der Vergleich der Spektren der Kanüle A und Kanüle B zeigt deutlich, dass der spektrale Verlauf der Leistungsdicht von der Geometrie der Leckage und damit vom Ausströmvolumen/Zeit abhängt. Für die Kanüle A ergibt sich nach Vergleich mit den Parametersätzen der Datenbank ein Ausströmvolumen/Zeit von 16 Nl/min, für die Kanüle B von 0,5 Nl/min.

## Ausführungsbeispiel 2

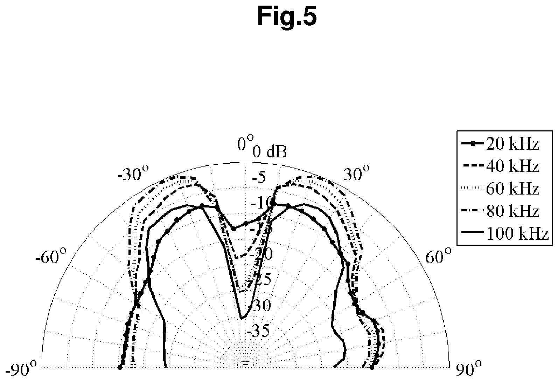

Für eine Kanüle B mit einem Durchmesser $D_B$ = 0,25mm und einer Länge $L_B$ = 12,7 mm die von einem Gas durchströmt wird, wurde der Schalldruck an einem Leck gemessen. Der Messabstand der Sonde zum Leck betrug 1 m, der Innendruck in der Kanüle 7 barü. Der Verstärkungsfaktor der Messung betrug 4. Der Schaldruck wurde in Abhängigkeit vom Winkel $\psi$ zwischen Sonde und Leckachse gemessen. Der Winkel $\psi$ variiert zwischen 0° und 90°. Es wurden jeweils 39999 Einzelspektren ausgewertet (50% Überlapp der Zeitsignale), für die anschließend ein Leistungsdichtespektrum in einem Frequenzbereich von 4 kHz bis 100 kHz berechnet wurde. Aus diesen Einzelspektren wurde ein mittleres Leistungsdichtespektrum berechnet. Die spektrale Auflösung beträgt 4 kHz. Der Pegel ist in Abhängigkeit des Winkels zwischen Sonde und Leck in Figur 5 dargestellt. Es ist deutlich eine Abhängigkeit des mittleren Leistungsdichtespektrums und damit des Schalldrucks im Frequenzbereich zwischen 4 kHz und 100kHz vom Winkel $\psi$ zwischen Sonde und Leckachse zu erkennen. In Abbildung 4 (B) ist das Leistungsdichtespektrum über einen Frequenzbereich von 4 kHz bis 100 kHz aufgetragen. Für die Auswertung der Daten ist bevorzugt das Spektrum mit der ausgeprägtesten Charakteristik zu verwenden. Dieses ist gleichzeitig das Spektrum mit der größten Intensität. Für den Anwender ergibt sich damit ein einfaches Kriterium in welchem Winkel die Sonde zum Leck positioniert werden muss, um ein sicheres Messergebnis zu erzielen.

### Ausführungsbeispiel 3

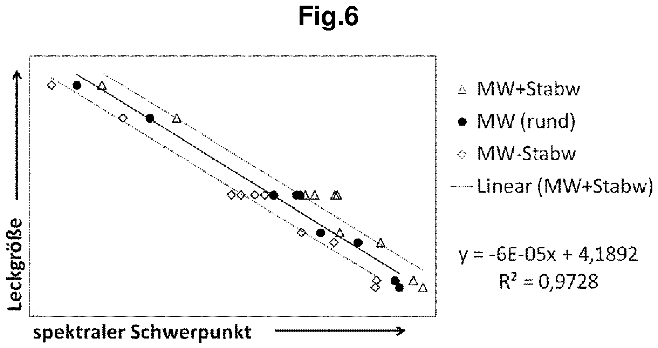

Für unterschiedliche runde und gequetschte Kanülen wurden unter den gleichen experimentellen Bedingungen (Abstand Sonde-Leck: 0,2 m, Winkel $\psi$ zwischen Sonde und Leckachse: 25°, Innendruck: >1 barü) der Schalldruck gemessen und die Spektren im Frequenzbereich von10 kHz bis 100 kHz berechnet. Für jedes Leck wurde aus den Spektren der mittlere spektrale Schwerpunkt bestimmt und den bekannten Lochdurchmessern zugeordnet. Diese Zuordnung ist in Figur 6 abgebildet. Mit Hilfe einer Regressionsgleichung lässt sich der folgende Zusammenhang beschreiben:

$$D = -5,79 \cdot 10^{-5} \cdot f_x + 4,1892 \quad (23)$$

mit
$R^2$ = 0,9728

Es besteht demnach ein eindeutiger Zusammenhang zwischen akustischen Daten und den unterschiedlichen Leckgeometrien. Mit Hilfe dieser Zusammenhänge können Messdaten Klassifiziert und bestimmten Leckgeometrien und damit einem bestimmten Ausströmvolumen/Zeit zugeordnet werden.

### Liste der Bezugszeichen

| | |
|---|---|
| 10 | Vorrichtung |
| 11 | Sensorgehäuse mit Mikrofon-Schallentkopplung |
| 12 | Modul |
| 13 | Mikrofon |
| 14 | Peillaser |
| 15 | Temperatursensor |
| 16 | Faltenbalg |
| 17 | kurzes Schallführungsrohr |
| 18 | Leckage |

### Patentansprüche

1.   Verfahren zur Bewertung von Austrittsvolumenströmen von Gasen, auf der Basis von akustischen Messungen mit einem Ultraschallsensor, wobei die Frequenzen der Ausströmungsgeräusche im Bereich von ca. 10 kHz bis 100 kHz erfasst und bewertet werden, umfassend die Schritte

i) Lecksuche, und
ii) Leckbewertung,
**dadurch gekennzeichnet, dass** für die Leckbewertung

die Ausströmvolumina/Zeit dV/dt in Abhängigkeit der Frequenz- und Amplitudenbewertung des Schalldruckpegels bestimmt werden, wobei
die Zeitsignale des Schallpegels bei einem Empfangswinkel zwischen Ultraschallsensor (11) und Leckachse (18) aufgenommen werden, bei dem der Schallpegel maximal ist; eine Spektrenberechnung für den entsprechenden zeitlichen Abschnitt aus dem Signal mit vorgegebener spektraler Auflösung und die Mittelung einer vorgegebenen Anzahl von Einzelspektren erfolgt;
der spektrale Schwerpunkt für das mittlere Spektrum berechnet wird;
dem spektralen Schwerpunkt über Kalibrierkurven eine effektive Leckfläche $A_a$ zugeordnet wird; und
das Ausströmvolumen/Zeit dV/dt wie folgt berechnet wird:

$$dV/dt = c \cdot A_a,$$

wobei c eine Konstante ist, die je nach Form des Lecks und der konstruktiven Begrenzung der Ausbreitung vorgegeben ist.

2. Verfahren nach Anspruch 1, **dadurch gekennzeichnet, dass** die Ausströmvolumina/Zeit nach einer vorgegebenen Klassifikation nach Leckgröße oder Leckrate eingeordnet werden.

3. Verfahren nach Anspruch 2, **dadurch gekennzeichnet, dass** zur Auswertung und Beurteilung der strömungsakustischen Messergebnisse die folgenden Funktionen herangezogen werden:

a) Messung des spektral aufgelösten Schallpegels im Zeitbereich analog oder digital durch Bandpassfilter für die Frequenzspektren 1/3 Oktav, und und
b) Berechnung des Schalldruckpegels im Frequenzbereich mittels Fast Fouriertransformation (FFT) und nachfolgender Berechnung des Leistungsspektrums.

4. Verfahren nach einem der Ansprüche 2 oder 3, **dadurch gekennzeichnet, dass**

a. die Berechnung des Pegels im Frequenzbereich mittels des über Fast Fouriertransformation ermittelten Leistungsspektrums erfolgt,
b. die Linienzahl an die spektrale Auflösung angepasst wird,
c. eine Filterung vorgeschaltet wird, und
d. aus den geglätteten Schalldruckpegelspektren ein Parametersatz extrahiert wird.

5. Verfahren nach Anspruch 4, **dadurch gekennzeichnet, dass** für die Extraktion des Parametersatzes aus den Spektren

• die Lage der lokalen Frequenzmaxima bestimmt wird,
• die Frequenzbereiche mit lokalen Maxima empirisch getrennt werden und für die einzelnen spektralen Anteile um die lokalen Maxima Schwerpunkte berechnet werden.

6. Vorrichtung (10) zur akustischen Messung von Austrittsgeschwindigkeiten und/oder Austrittsvolumenströmen, umfassend einen Ultraschallsensor (11), ein akustisches Horn und eine Software, **dadurch gekennzeichnet, dass** zur Beurteilung und Klassifizierung eines Lecks Parametersätze und/oder Spektren in der Software hinterlegt sind, die die Ausströmgeräusche von Leckagen im Bereich von 10 kHz bis 100 kHz charakterisieren, wobei der Ultraschallsensor (11) ein Mikrofon (13), einen Analogfilter als Hochpass, einen Digitalfilter als Tiefpass sowie optional einen Laser (14) und/oder einen Temperaturfühler (15) umfasst, und wobei die Vorrichtung dazu konfiguriert ist, die Verfahren nach einem der Ansprüche 1-5 durchzuführen.

7. Vorrichtung (10) nach Anspruch 6, **dadurch gekennzeichnet, dass** der Ultraschallsensor (11) ein breitbandiger Schallempfänger ist.

8. Vorrichtung (10) nach einem der Ansprüche 6 oder 7, **dadurch gekennzeichnet, dass** der Ultraschallsensor (11) linearisierbar ist.

9. Vorrichtung (10) nach einem der Ansprüche 6-8, **dadurch gekennzeichnet, dass** das akustische Horn in Form eines Schallführungsrohres (17) ohne eigene Richtwirkung ausgeführt ist.

10. Vorrichtung (10) nach einem der Ansprüche 6-8, **dadurch gekennzeichnet, dass** das akustische Horn als Schallführungsrohr (17) ausgeführt ist, wobei das Schallführungsrohr (17) ein einfaches gerades Rohrstück oder ein Rohr mit einem beweglichen Abschnitt sein kann und wobei das Schallführungsrohr (17) optional eine Spitze aufweisen kann.

**Claims**

1. Method for the evaluation of outflow volume flows of gases, on the basis of acoustic measurements with an ultrasonic sensor, whereby the frequencies of the outflow noises in the range of approximately 10 kHz to 100 kHz are recorded and evaluated, comprising the steps

(i) leak detection; and
(ii) leakage assessment,
**characterised in that** for the leakage assessment
the outflow volumes/time dV/dt are determined as a function of the frequency and amplitude weighting of the sound pressure level, wherein
the time signals of the sound level are recorded at a reception angle between the ultrasonic sensor (11) and the leakage axis (18) at which the sound level is at its maximum;
a spectrum calculation for the corresponding time segment from the signal with a given spectral resolution and averaging of a given number of individual spectra is performed; the spectral centre of gravity for the average spectrum is calculated;
an effective leakage area Aa is assigned to the spectral centre of gravity via calibration curves; and
the outflow volume/time dV/dt is calculated as follows:

$$dV/dt = c \cdot A_a,$$

wherein c is a constant, which is predetermined depending on the shape of the leakage and the constructive limitation of the propagation.

2. Method according to claim 1, **characterised in that** the outflow volumes/time are classified according to a predetermined classification according to leakage size or leakage rate.

3. Method according to claim 2, **characterised in that** the following functions are used for the evaluation and assessment of the flow-acoustic measurement results:

a) measurement of the spectrally resolved sound level in the time domain analogue or digital by bandpass filters for the frequency spectra 1/3 octave, and
narrow band octaves n(1/12 ...1/24);
and
b) calculation of the sound pressure level in the frequency domain using Fast Fourier Transformation (FFT) and subsequent calculation of the power spectrum.

4. Method according to one of claims 2 or 3, **characterised in that**

a. the level in the frequency domain is calculated using the power spectrum determined by Fast Fourier transformation,
b. the number of lines is adapted to the spectral resolution,
c. a filter is installed before, and
d. a parameter set is extracted from the smoothed sound pressure level spectra.

5. Method according to claim 4, **characterized in that** for the extraction of the parameter set from the spectra

• the position of the local frequency maxima is determined,
• the frequency ranges with local maxima are separated empirically and the centres of gravity are calculated for the individual spectral components around the local maxima.

6. Device (10) for the acoustic measurement of outflow velocities and/or outflow volume flows, comprising an ultrasonic sensor (11), an acoustic horn and software, **characterised in that** parameter sets and/or spectra are stored in the software for assessing and classifying a leakage, which characterise the outflow noise of leakages in the range of 10 kHz to 100 kHz, wherein the ultrasonic sensor (11) comprises a microphone (13), an analogue filter as highpass, a digital filter as low-pass, and optionally a laser (14) and/or a temperature sensor (15), and wherein the apparatus is configured to perform the methods according to any one of claims 1-5.

7. Device (10) according to claim 6, **characterised in that** the ultrasonic sensor (11) is a broadband sound receiver.

8. Device (10) according to one of claims 6 or 7, **characterised in that** the ultrasonic sensor (11) is linearisable.

9. Device (10) according to one of the claims 6-8, **characterised in that** the acoustic horn is designed in the form of a sound guide tube (17) without its own directivity.

10. Device (10) according to one of claims 6-8, **characterized in that** the acoustic horn is designed as a sound guide tube (17), wherein the sound guide tube (17) can be a simple straight tube section or a tube with a movable section and wherein the sound guide tube (17) can optionally have a tip.

**Revendications**

1. Procédé d'évaluation de débits volumiques de sortie de gaz sur la base de mesures acoustiques au moyen d'un capteur à ultrasons, les fréquences des bruits de débits volumiques de sortie étant détectées et évaluées dans la gamme d'environ 10 kHz à 100 kHz, le procédé comprenant les étapes suivantes

> i) recherche de fuites, et
> ii) évaluation de fuites,
> **caractérisé en ce que**, pour évaluer les fuites,
> les débits volumiques de sortie/temps de sortie dV/dt sont déterminés en fonction de l'évaluation de la fréquence et de l'amplitude du niveau de pression acoustique,
> les signaux temporels du niveau sonore étant enregistrés pour un angle de réception, formé entre le capteur à ultrasons (11) et l'axe de fuite (18), auquel le niveau sonore est maximal ;
> un calcul spectral pour le segment de temps correspondant étant effectué à partir du signal avec une résolution spectrale prédéterminée et la moyenne d'un nombre prédéterminé de spectres individuels étant effectuée ;
> le centre de gravité spectral étant calculé pour le spectre moyen ;
> une surface de fuite effective $A_a$ étant associée au centre de gravité spectral par le biais de courbes d'étalonnage ; et
> le débit volumiques de sortie/temps dV/dt étant calculé comme suit :

$$dV/dt = c \cdot A_a,$$

> c étant une constante qui est spécifiée en fonction de la forme de la fuite et de la limitation structurelle de la propagation.

2. Procédé selon la revendication 1, **caractérisé en ce que** les débits volumiques de sortie/temps sont ordonnés selon une classification prédéterminée en fonction de la taille ou du taux de fuites.

3. Procédé selon la revendication 2, **caractérisé en ce que** les fonctions suivantes sont utilisées pour évaluer et apprécier les résultats des mesures acoustiques d'écoulement:

> a) mesure du niveau sonore à résolution spectrale dans le domaine temporel, de manière analogique ou numérique, à l'aide de filtres passe-bande pour les spectres de fréquences de 1/3 d'octave, et les octaves à bande étroite n (1/12... 1/24) ;
> et
> b) calcul du niveau de pression acoustique dans le domaine fréquentiel par transformation de Fourier rapide (FFT) et calcul ultérieur du spectre de puissance.

4. Procédé selon l'une des revendications 2 et 3, **caractérisé en ce que**

> a. le calcul du niveau dans le domaine fréquentiel est effectué à partir du spectre de puissance déterminé par transformation de Fourier rapide,
> b. le nombre de lignes est adapté à la résolution spectrale,
> c. un filtre est monté en amont, et
> d. un ensemble de paramètres est extrait des spectres de niveau de pression acoustique lissés.

5. Procédé selon la revendication 4, **caractérisé en ce que**, pour extraire l'ensemble de paramètres des spectres,

• la position des maxima de fréquence locaux est déterminée,
• les domaines fréquentiels ayant des maxima locaux sont séparés empiriquement et des centres de gravité sont calculés autour des maxima locaux pour les composantes spectrales individuelles.

6. Dispositif (10) de mesure acoustique de vitesses de sortie et/ou de débits volumiques de sortie, le dispositif comprenant un capteur à ultrasons (11), un cornet acoustique et un logiciel, **caractérisé en ce que** des ensembles de paramètres et/ou des spectres, caractérisant les bruits de débits de sortie des fuites dans la gamme de 10 kHz à 100 kHz, sont mémorisés dans le logiciel pour apprécier et classifier une fuite, le capteur à ultrasons (11) comprenant un microphone (13), un filtre analogique passe-haut, un filtre numérique passe-bas et éventuellement un laser (14) et/ou un capteur de température (15), et le dispositif étant conçu pour mettre en œuvre le procédé selon l'une des revendications 1 à 5.

7. Dispositif (10) selon la revendication 6, **caractérisé en ce que** le capteur à ultrasons (11) est un récepteur acoustique à large bande.

8. Dispositif (10) selon l'une des revendications 6 et 7, **caractérisé en ce que** le capteur à ultrasons (11) peut être linéarisé.

9. Dispositif (10) selon l'une des revendications 6-8, **caractérisé en ce que** le cornet acoustique est conçu sous la forme d'un tube de guidage acoustique (17) sans directivité propre.

10. Dispositif (10) selon l'une des revendications 6 à 8, **caractérisé en ce que** le cornet acoustique est réalisé sous la forme d'un tube de guidage acoustique (17), le tube de guidage acoustique (17) pouvant être un simple morceau de tube droit ou un tube pourvu d'une portion mobile et le tube de guidage acoustique (17) pouvant éventuellement avoir une pointe.

## FIG. 1

φ Messwinkel

d Leckdurchmesser

L Lecklänge

# FIG. 2

10 kHz          100 kHz

Hörbereich          Bewertung

# Fig. 3

# Fig.4

(A)

(B)

# Fig.5

# Fig.6

Legend:
- △ MW+Stabw
- ● MW (rund)
- ◇ MW-Stabw
- ······ Linear (MW+Stabw)

$$y = -6E\text{-}05x + 4{,}1892$$
$$R^2 = 0{,}9728$$

Y-axis: Leckgröße

X-axis: spektraler Schwerpunkt

# Fig. 7

```
┌─────────────────────┐         ┌─────────────────────┐      ┌─────────────────────┐
│   Druck im System   │         │     Strömungs-      │      │      Leckrate       │
│ (p_um/p_i < 0,528)  │- - - - -│   geschwindigkeit   │──────│    Volumenstrom     │
│                     │         │      u_th = c       │      │   V̇ = μ · u · A     │
└─────────────────────┘         └─────────────────────┘      └─────────────────────┘

┌─────────────┐   ┌─────────────┐   ┌─────────────┐   ┌─────────────────────┐
│  akustische │   │  spektraler │   │    Leck-    │   │    Signalenergie    │
│  Parameter  │   │ Schwerpunkt │───│  fläche A   │   │      (Pegel)        │
└─────────────┘   └─────────────┘   └─────────────┘   └─────────────────────┘

┌─────────────┐         ┌─────────────┐        ┌─────────────┐
│    Mess-    │         │   Winkel    │        │   Abstand   │
│  geometrie  │         │             │        │             │
└─────────────┘         └─────────────┘        └─────────────┘
```

$$\dot{V} = \mu \cdot u \cdot A$$

$$u_{th} = c$$

$$(p_{um}/p_i < 0{,}528)$$

# Fig. 8

```
┌─────────────────────┐      ┌─────────────────────┐
│   Sensor/ Mikrofon;  │◄─────│       Input          │
│    A/D Wandlung      │      │    Kalibrierung      │
└─────────────────────┘      └─────────────────────┘
           │
┌─────────────────────┐
│   Bandpassfilterung  │
│    des Zeitsignals   │
└─────────────────────┘
           │
┌─────────────────────┐
│      Spektren/       │
│  Schmalbandoktaven   │
└─────────────────────┘
           │
┌─────────────────────┐      ┌─────────────────────┐
│    Umrechnung in     │─────►│     Abschätzung      │
│   Schalldruckpegel   │      │    Schallleistung    │
└─────────────────────┘      └─────────────────────┘
           │                            │
┌─────────────────────┐      ┌─────────────────────┐
│  Zusammenfassung der │      │   Frequenzkorrektur  │
│    Frequenzbänder    │      │    Schallleistung    │
└─────────────────────┘      └─────────────────────┘
           │                            │
┌─────────────────────┐      ┌─────────────────────┐
│     Reduktion der    │      │    Input Abstand     │
│   Frequenzauflösung  │      │    und Messwinkel    │
│ (Parameterextraktion)│      └─────────────────────┘
└─────────────────────┘                 │
           │                            │
┌─────────────────────┐                 │
│  Spektrenvergleich mit│                │
│  hinterlegter Datenbank│               │
│ (Minimierung Abweichung)│              │
└─────────────────────┘                 │
           │                            │
┌─────────────────────┐                 │
│ Aussage zur Wahrscheinlichkeit│◄──────┘
│   einer Ausströmrate │
└─────────────────────┘
           │
┌─────────────────────┐
│  Klassifikation der  │
│      Leckraten       │
└─────────────────────┘
```

# Fig. 9

# Fig. 10

# Fig.11

# Fig. 12

# Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009048340 A2
- WO 2009149140 A
- US 20140005958 A
- US 2014005958 A1

**In der Beschreibung aufgeführte Nicht-Patentliteratur**

- **P. TASHIAN.** *Successful Leak Detection using Ultrasonics, www.SuperiorSignal.com [08/08*
- **T. KLITZ ; L. PANZRAM ; D. PREVETI ; D. REINARTZ ; D. KAMEIER.** *Leckortung unter DasyLab S - Low Cost Hightech,* 2003, http://ifs.muv.fh-duesseldorf.de[08/08
- **L. JAKEVICIUS ; J. BUTKUS.** Application of Acoustic Methods for Determination of Coordinates of Leakage. *Cavities bounded by large surface,* 2001, vol. 38 (1), ISSN 1392-2114